# EUROPEAN PATENT APPLICATION

(11) **EP 4 583 210 A1**
(43) Date of publication of application: **09.07.2025**
(21) Application number: 24784205.7
(22) Date of filing: 30.03.2024
(51) Int. Cl.: H01M 4/66, H01M 50/581, H01M 50/586

(54) **ELECTROCHEMICAL DEVICE AND ELECTRONIC DEVICE**

(30) Priority: 06.04.2023 CN 202310358816
(71) Applicant: Ningde Amperex Technology Limited, Ningde, Fujian 352100 (CN)
(72) Inventor: KONG, Gengjin, Ningde, Fujian 352100 (CN)
(74) Representative: Icosa
(86) International application number: PCT/CN2024/085111
(87) International publication number: WO 2024/208121

(57) **Abstract**

This application discloses an electrochemical device and an electronic device. The electrochemical device includes: a positive electrode plate, a negative electrode plate, a separator, and a shape-memory alloy component. The positive electrode plate includes a positive current collector and a positive active material layer. The negative electrode plate includes a negative current collector and a negative active material layer. The separator is disposed between the positive electrode plate and the negative electrode plate. The shape-memory alloy component is disposed on one side of the positive current collector and/or the negative current collector, the side being oriented toward the separator. The shape-memory alloy component is spaced apart from the positive current collector. The shape-memory alloy component includes a phase change portion and a support portion. The phase change portion includes a first end and a second end disposed opposite to each other. The first end is connected to the support portion. When a temperature of the electrochemical device is higher than a preset temperature, the second end deforms toward the separator to puncture the separator, and the support portion deforms in a reverse direction relative to the phase change portion, so that the phase change portion exerts a sufficient force to puncture the separator, thereby reducing the risk of thermal runaway of the electrochemical device.

## Description

### TECHNICAL FIELD

This application relates to the field of battery technology, and in particular, to an electrochemical device and an electronic device.

### BACKGROUND

With the development of technology, the voltage, energy density, charge rate, and the like designed for an electrochemical device are increasingly higher. Consequently, the risk of thermal runaway of the electrochemical device during use is also increasingly higher, thereby posing huge challenges to the safety performance of the electrochemical device. How to reduce the risk of thermal runaway of the electrochemical device has become a pressing technical challenge.

### SUMMARY

In view of the foregoing situation, it is necessary to provide an electrochemical device to reduce the risk of thermal runaway and improve safety performance.

An embodiment of this application provides an electrochemical device. The electrochemical device includes: a positive electrode plate, a negative electrode plate, a separator, and a shape-memory alloy component. The positive electrode plate includes a positive current collector and a positive active material layer, where the positive active material layer is disposed on a surface of the positive current collector. The negative electrode plate includes a negative current collector and a negative active material layer, where the negative active material layer is disposed on a surface of the negative current collector. The separator is disposed between the positive electrode plate and the negative electrode plate. The shape-memory alloy component is disposed on one side of the positive current collector and/or the negative current collector, the side being oriented toward the separator. The shape-memory alloy component is spaced apart from the positive current collector. The shape-memory alloy component includes a phase change portion and a support portion. The phase change portion includes a first end and a second end that are disposed opposite to each other. The first end is connected to the support portion. When a temperature of the electrochemical device is higher than a preset temperature, the second end deforms toward the separator to puncture the separator, and the support portion deforms in a reverse direction relative to the phase change portion.

In the electrochemical device, a shape-memory alloy component is disposed in the electrode plate. When the temperature in the electrochemical device reaches a preset temperature, the phase change portion of the shape-memory alloy component deforms and bends toward the separator. The support portion disposed at the first end of the phase change portion deforms in the reverse direction toward the separator to provide a firm support force for the phase change portion, thereby endowing the phase change portion with a force strong enough to puncture the separator. In this way, an internal short circuit occurs between the negative active material layer and the positive active material layer, or between the negative current collector and the positive active material layer, thereby implementing controllable and relatively safe self-discharge, lowering the voltage and capacity of the electrochemical device, reducing the risk of thermal runaway of the electrochemical device, and improving the safety performance of the electrochemical device.

In some embodiments of this application, a bend angle α of the reversely deformed support portion satisfies: 15° ≤ α < 40°, thereby enabling the support portion to provide a stable support force for the phase change portion, endowing the phase change portion with a force strong enough to puncture the separator, and reducing the impact caused by the reverse deformation of the support portion on the positive current collector or negative current collector.

In some embodiments of this application, a recessed region is disposed on one side of the support portion. The recessed region includes an opening. The phase change portion is accommodated in the recessed region. The first end is connected to the support portion in the recessed region. The second end is disposed toward the opening of the recessed region. The recessed region of the support portion contributes to reducing the volume occupied by the shape-memory alloy component, reduces the impact caused by the component on the positive active material layer or negative active material layer, and reduces the impact caused by the component on the energy density of the electrochemical device.

In some embodiments of this application, a receptacle is disposed in the support portion. The phase change portion is disposed in the receptacle. The first end is connected to the support portion on one side of the receptacle. The support portion includes a receptacle for accommodating the phase change portion, thereby increasing the surface area and structural strength of the support portion, enabling the support portion to provide a sufficient support force for the phase change portion, and enabling the phase change portion to puncture the separator, and in turn, reducing the risk of failure of the shape-memory alloy component.

In some embodiments of this application, the phase change portion includes a first phase change portion and a second phase change portion. The first phase change portion and the second phase change portion are connected to the support portion separately. The first phase change portion is spaced apart from the second phase change portion. When the temperature in the electrochemical device rises to a preset temperature, the first phase change portion and the second phase change portion bend and deform at the same time, thereby increasing the speed and success rate of puncturing the separator, reducing the risk of thermal runaway of the electrochemical device, and improving the safety performance of the electrochemical device.

In some embodiments of this application, the first phase change portion and the second phase change portion assume the same shape. The first phase change portion is centrosymmetric to the second phase change portion. When the temperature in the electrochemical device rises to the preset temperature, the first phase change portion and the second phase change portion bend in opposite directions and act on the separator to form a reverse tearing force on the surface of the separator, thereby increasing the speed and success rate of puncturing the separator, reducing the risk of thermal runaway of the electrochemical device, and improving the safety performance of the electrochemical device.

In some embodiments of this application, the first end of the phase change portion includes a first edge. The second end of the phase change portion includes a second edge. The first edge is parallel to the second edge. A length e of the first edge is greater than a length f of the second edge, thereby facilitating the phase change portion to puncture the separator by bending.

In some embodiments of this application, the length e of the first edge and the length f of the second edge satisfy: e/2 ≥ f > 0, thereby facilitating the phase change portion to puncture the separator by bending.

In some embodiments of this application, a thickness of the shape-memory alloy component is less than a thickness of the negative active material layer or the positive active material layer, thereby making it convenient to place the shape-memory alloy component into the negative active material layer or positive active material layer, and reducing the impact caused by the shape-memory alloy component on the space utilization rate in the electrochemical device.

In some embodiments of this application, the negative active material layer covers the shape-memory alloy component of the negative electrode plate, thereby reducing lithium plating phenomena.

In some embodiments of this application, the shape-memory alloy component is disposed in the negative electrode plate. A height of the bent phase change portion is less than a distance between the support portion and the positive current collector, thereby favorably preventing the phase change portion from being connected to the positive current collector to cause a short circuit that involves the positive current collector, reducing the risk of thermal runaway of the electrochemical device, and improving the safety performance of the electrochemical device.

In some embodiments of this application, a bend angle θ between a deformed phase change portion and a plane in which the support portion is located before deformation satisfies: 30° ≤ θ < 180°, thereby facilitating the phase change portion to puncture the separator.

In some embodiments of this application, a length g of the phase change portion and a height H of the deformed phase change portion satisfy: g × Sinθ = H.

In some embodiments of this application, the length g of the phase change portion satisfies: 0.05 mm ≤ g < 40 mm, thereby facilitating the phase change portion to be able to protrude out of the active material layer and puncture the separator after bending and deforming, and reducing the risk of thermal runaway of the electrochemical device.

In some embodiments of this application, constituents of the shape-memory alloy component include at least one of: a nickel-titanium alloy, a titanium-nickel-niobium alloy, a titanium-nickel-palladium alloy, or a titanium-nickel-cobalt alloy.

In some embodiments of this application, a protection layer is disposed on a surface of the shape-memory alloy component. Constituents of the protection layer include at least one of Al₂O₃, TiO₂, or MgO. The protection layer serves a protection function to reduce the risk of the shape-memory alloy component being damaged by a foreign matter. The protection layer also play a role in reducing the electrical conductivity of the shape-memory alloy component. By reducing the electrical conductivity of the shape-memory alloy component, the protection layer reduces the heat production rate during an internal short circuit, and improves the safety of the electrochemical device.

In some embodiments of this application, when the temperature of the electrochemical device is lower than the preset temperature, the phase change portion and the support portion are able to return to an original shape, thereby reducing the risk of the shape-memory alloy component damaging the electrochemical device for a second time.

An embodiment of this application further provides an electronic device. The electronic device includes the electrochemical device according to any one of the foregoing embodiments.

In the electronic device, a shape-memory alloy component is disposed in the electrode plate of the electrochemical device. When the temperature in the electrochemical device reaches a preset temperature, the phase change portion of the shape-memory alloy component deforms and bends toward the separator. The support portion disposed at the first end of the phase change portion deforms in the reverse direction to provide a firm support force for the phase change portion, thereby endowing the phase change portion with a force strong enough to puncture the separator. In this way, an internal short circuit occurs between the negative active material layer and the positive active material layer, or between the negative current collector and the positive active material layer, thereby implementing controllable and relatively safe self-discharge, lowering the voltage and capacity of the electrochemical device, reducing the risk of thermal runaway of the electrochemical device, and reducing the impact on the electronic device caused by the temperature rise in the electrochemical device.

### BRIEF DESCRIPTION OF DRAWINGS

FIG. 1 is a schematic structural diagram of an electrochemical device according to an embodiment of this application;
FIG. 2 is a schematic diagram of a structure in which a first tab and a second tab are connected to an electrode assembly according to an embodiment of this application;
FIG. 3 is a cross-sectional view of a structure in which a first tab and a second tab are connected to an electrode assembly according to an embodiment of this application;
FIG. 4 is a schematic diagram of a partial structure in which a shape-memory alloy component is placed in a negative active layer and remains undeformed according to an embodiment of this application;
FIG. 5 is a schematic diagram of a partial structure in which a shape-memory alloy component is placed in a negative active layer and is in a deformed state according to an embodiment of this application;

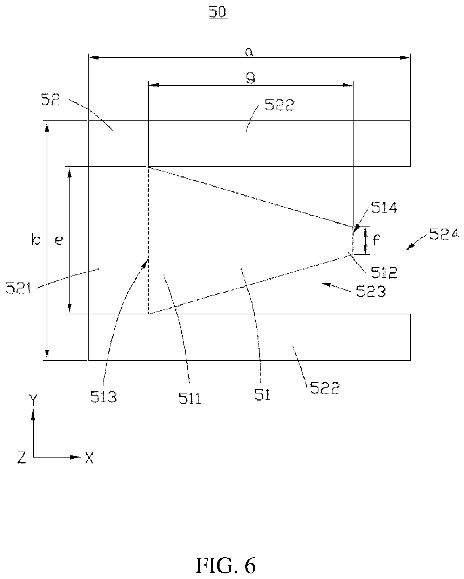

FIG. 6 is a view of a shape-memory alloy component undeformed as viewed along a first direction according to an embodiment of this application;
FIG. 7 is a view of a shape-memory alloy component in a deformed state as viewed along a second direction according to an embodiment of this application;
FIG. 8 is a view of a shape-memory alloy component undeformed as viewed along a first direction according to an embodiment of this application;
FIG. 9 is a view of a shape-memory alloy component undeformed as viewed along a first direction according to an embodiment of this application;
FIG. 10 is a view of a shape-memory alloy component in a deformed state as viewed along a first direction according to an embodiment of this application;
FIG. 11 is a cross-sectional view of a shape-memory alloy component in a deformed state as viewed along a direction perpendicular to a second direction according to an embodiment of this application;
FIG. 12 is a view of a shape-memory alloy component undeformed as viewed along a first direction according to an embodiment of this application;
FIG. 13 is a view of a shape-memory alloy component in a deformed state as viewed along a first direction according to an embodiment of this application;
FIG. 14 is a view of a shape-memory alloy component undeformed as viewed along a first direction according to an embodiment of this application;
FIG. 15 is a view of a shape-memory alloy component in a deformed state as viewed along a first direction according to an embodiment of this application; and
FIG. 16 is a schematic structural diagram of an electronic device according to an embodiment of this application.

This application is further described below with reference to the following specific embodiments and the foregoing drawings.

### DETAILED DESCRIPTION

The following describes the technical solutions in the embodiments of this application with reference to the drawings hereto. Evidently, the described embodiments are merely a part of but not all of the embodiments of this application.

It is hereby noted that a component considered to be "connected to" another component may be directly connected to the other component or may be connected to the other component through an intermediate component. A component considered to be "disposed on" another component may be directly disposed on the other component or may be disposed on the other component through an intermediate component. In this application, unless otherwise expressly specified and qualified, the terms such as "mount", "concatenate", "connect", and "fix" are generic in a broad sense, for example, mean a fixed connection, a detachable connection, or a one-piece configuration; or mean a mechanical connection or electrical connection; or mean a direct connection or indirect connection implemented through an intermediary; or mean internal communication between two components. A person of ordinary skill in the art is able to understand the specific meanings of the terms in this application according to specific situations. The term "and/or" used herein includes any and all combinations of one or more relevant items enumerated.

Unless otherwise defined, all technical and scientific terms used herein bear the same meanings as what is normally understood by a person skilled in the technical field of this application. The terms used in the specification of this application are merely intended to describe specific embodiments but not to limit this application. The terms "include" and "contain" and any variations thereof used in the specification, claims, and brief description of drawings of this application are intended to cover a nonexclusive inclusion.

In the description of some embodiments of this application, the technical terms "first" and "second" are merely intended to distinguish between different items but not intended to indicate or imply relative importance or implicitly specify the number of the indicated technical features, specific order, or order of precedence. In the description of some embodiments of this application, unless otherwise expressly specified, "a plurality of" means two or more.

Reference to an "embodiment" herein means that a specific feature, structure or characteristic described with reference to this embodiment may be included in at least one embodiment of this application. Reference to this term in different places in the specification does not necessarily represent the same embodiment, nor does it represent an independent or alternative embodiment in a mutually exclusive relationship with other embodiments. To the extent that no conflict occurs, different embodiments of this application may be combined with each other.

It is hereby noted that, dimensions such as thickness, length, and width of various components in some embodiments of this application shown in the drawings, and dimensions such as overall thickness, length, and width of an integrated device are merely illustrative descriptions, but do not constitute any limitation on this application.

An embodiment of this application provides an electrochemical device. The electrochemical device includes: a positive electrode plate, a negative electrode plate, a separator, and a shape-memory alloy component. The positive electrode plate includes a positive current collector and a positive active material layer, where the positive active material layer is disposed on a surface of the positive current collector. The negative electrode plate includes a negative current collector and a negative active material layer, where the negative active material layer is disposed on a surface of the negative current collector. The separator is disposed between the positive electrode plate and the negative electrode plate. The shape-memory alloy component is disposed on one side of the positive current collector and/or the negative current collector, the side being oriented toward the separator. The shape-memory alloy component is spaced apart from the positive current collector. "The shape-memory alloy component is disposed on one side of the positive current collector and/or the negative current collector, the side being oriented toward the separator" means that the shape-memory alloy component may be disposed in one or more of the following positions: (i) a position between the positive current collector and the positive active material layer; (ii) a position between the positive current collector and the separator; (iii) a position between the positive active material layer and the separator; (iv) a position between the negative current collector and the negative active material layer; (v) a position between the negative current collector and the separator; or (vi) a position between the negative active material layer and the separator. "Spaced apart" herein means that the shape-memory alloy component is not connected to the positive current collector, that is, the shape-memory alloy component is not disposed on the surface of the positive current collector. The shape-memory alloy component includes a phase change portion and a support portion. The phase change portion includes a first end and a second end that are disposed opposite to each other. The first end is connected to the support portion. When a temperature of the electrochemical device is higher than a preset temperature, the second end deforms toward the separator to puncture the separator, and the support portion deforms in a reverse direction relative to the phase change portion.

In the electrochemical device, a shape-memory alloy component is disposed in the electrode plate. When the temperature in the electrochemical device reaches a preset temperature, the phase change portion of the shape-memory alloy component deforms and bends toward the separator. The support portion disposed at the first end of the phase change portion deforms in the reverse direction to provide a firm support force for the phase change portion, thereby endowing the phase change portion with a force strong enough to puncture the separator. In this way, an internal short circuit occurs between the negative active material layer and the positive active material layer, or between the negative current collector and the positive active material layer, thereby implementing controllable and relatively safe self-discharge, lowering the voltage and capacity of the electrochemical device, reducing the risk of thermal runaway of the electrochemical device, and improving the safety performance of the electrochemical device.

The following further describes the embodiments of this application with reference to drawings.

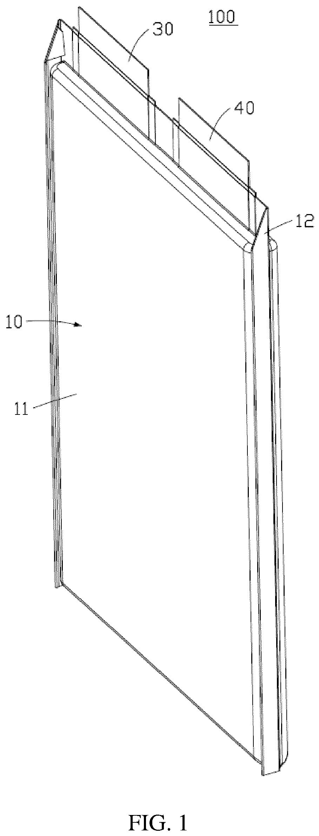

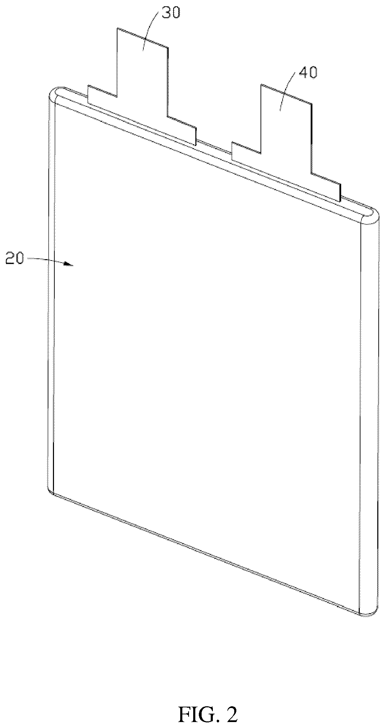

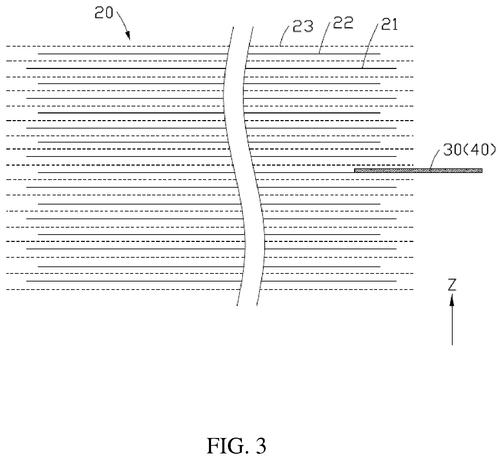

As shown in FIG. 1, FIG. 2, and FIG. 3, an embodiment of this application provides an electrochemical device 100, including a housing 10, an electrode assembly 20, a first tab 30, and a second tab 40. The electrode assembly 20 is accommodated in the housing 10. The first tab 30 and the second tab 40 are both connected to the electrode assembly 20, and protrude out of the housing 10. The first tab 30 and the second tab 40 are configured to be electrically connected to an external device to enable the electrochemical device 100 to be charged and discharged.

In an embodiment, the electrochemical device 100 is any one of a pouch cell, a button cell, a steel-shell battery, or a cylindrical battery. The following describes a pouch cell as an example of the electrochemical device 100 in more detail.

The housing 10 includes a body portion 11 and a seal edge portion 12. The seal edge portion 12 is connected to the body portion 11 and extends from the body portion 11. The electrode assembly 20 is disposed inside the body portion 11. The first tab 30 and the second tab 40 protrude from the seal edge portion 12.

The electrode assembly 20 includes a negative electrode plate 21, a positive electrode plate 22, and a separator 23. The separator 23 is disposed between the negative electrode plate 21 and the positive electrode plate 22, and is bonded to the negative electrode plate 21 and/or the positive electrode plate 22. Optionally, the separator 23 is bonded to both the negative electrode plate 21 and the positive electrode plate 22. Optionally, the separator 23 is bonded to the negative electrode plate 21. Optionally, the separator 23 is bonded to the positive electrode plate 22.

In an embodiment, the negative electrode plate 21, the positive electrode plate 22, and the separator 23 are stacked to form an electrode assembly 20. In an embodiment, the negative electrode plate 21, the positive electrode plate 22, and the separator 23 are wound together to form an electrode assembly 20.

The first tab 30 is connected to the negative electrode plate 21, and the second tab 40 is connected to the positive electrode plate 22.

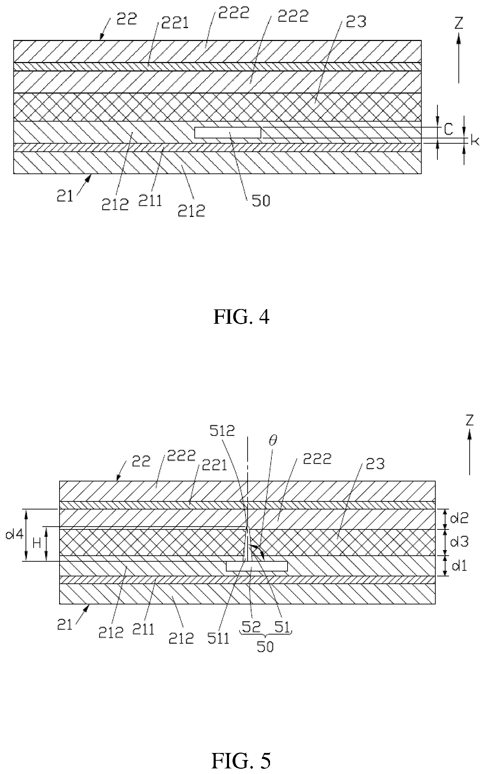

As shown in FIG. 4 and FIG. 5, the negative electrode plate 21 includes a negative current collector 211 and a negative active material layer 212. The negative active material layer 212 is disposed on a surface of the negative current collector 211. Optionally, the negative current collector 211 is a copper foil. Optionally, the negative current collector 212 is graphite.

The positive electrode plate 22 includes a positive current collector 221 and a positive active material layer 222. The positive active material layer 222 is disposed on a surface of the positive current collector 221. Optionally, the positive current collector 221 is an aluminum foil. Optionally, the positive active material layer 222 is lithium cobalt oxide.

The electrochemical device 100 further includes a shape-memory alloy component 50. The shape-memory alloy component 50 is disposed between the negative current collector 211 and the separator 23, or between the positive current collector 221 and the separator 23. In addition, the shape-memory alloy component 50 is spaced apart from the positive current collector 221 along the first direction Z. In an embodiment, the first direction Z is a direction along a thickness of the separator 23.

The shape-memory alloy component 50 includes a phase change portion 51 and a support portion 52. The phase change portion 51 includes a first end 511 and a second end 512 that are disposed opposite to each other. The first end 511 is connected to the support portion 52. When a temperature of the electrochemical device is higher than a preset temperature, the second end 512 deforms toward the separator 23 to puncture the separator 23, and the support portion 52 deforms in a reverse direction relative to the phase change portion 51.

The shape-memory alloy component 50 assumes a shape memory effect. The shape-memory alloy component 50 is deformed by an external force. When the external force disappears, the shape-memory alloy component 50 is able to return to the original shape under a specified temperature condition.

In the electrochemical device 100 of this application, by virtue of the shape memory effect of the shape-memory alloy component 50, when the temperature in the electrochemical device 100 reaches a preset temperature, the phase change portion 51 of the shape-memory alloy component 50 deforms and bends toward the separator 23. The support portion 52 disposed at the first end 511 of the phase change portion 51 deforms in the reverse direction to provide a firm support force for the phase change portion 51, thereby endowing the phase change portion 51 with a force strong enough to puncture the separator 23. In this way, an internal short circuit occurs between the negative active material layer 212 and the positive active material layer 222, or between the negative current collector 211 and the positive active material layer 222, thereby implementing controllable and relatively safe self-discharge, lowering the voltage and capacity of the electrochemical device 100, reducing the risk of thermal runaway of the electrochemical device 100, and improving the safety performance of the electrochemical device 100.

In an embodiment, when the temperature in the electrochemical device 100 is lower than the preset temperature, the phase change portion 51 and the support portion 52 are able to return to an original shape, thereby reducing the risk of the shape-memory alloy component 50 damaging the electrochemical device 100 for a second time.

In an embodiment, the preset temperature is 90° C to 135° C. When the temperature in the electrochemical device 100 falls within the preset interval, the phase change portion 51 and the support portion 52 deform in opposite directions, respectively, to puncture the separator 23 to form an internal short circuit, thereby facilitating control over the temperature of the electrochemical device 100, reducing the risk of the thermal runaway of the electrochemical device 100, and improving the safety performance of the electrochemical device 100.

In an embodiment, the preset temperature is 90 °C to 120 °C, thereby facilitating further control over the temperature of the electrochemical device 100 through the deformation of the shape-memory alloy component 50, reducing the risk of thermal runaway of the electrochemical device 100, and improving the safety performance of the electrochemical device 100.

In an embodiment, constituents of the shape-memory alloy component 50 include at least one of: a nickel-titanium alloy, a titanium-nickel-niobium alloy, a titanium-nickel-palladium alloy, or a titanium-nickel-cobalt alloy.

In an embodiment, in the nickel-titanium alloy, the percentage of nickel is 49% to 59%, and the percentage of titanium is 41% to 51%.

In an embodiment, in the titanium-nickel-niobium alloy, the percentage of titanium is 45% to 50%, the percentage of nickel is 40% to 45%, and the percentage of niobium is 5% to 10%.

In an embodiment, in the titanium-nickel-palladium alloy, the percentage of titanium is 48% to 52%, the percentage of nickel is 10% to 50%, and the percentage of palladium is 0 to 42%.

In an embodiment, in the titanium-nickel-cobalt alloy, the percentage of titanium is 44% to 59%, the percentage of nickel is 41% to 51%, and the percentage of cobalt is 0 to 5%.

In an embodiment, a protection layer (not shown in the drawing) is disposed on a surface of the shape-memory alloy component 50. Constituents of the protection layer include at least one of Al₂O₃, TiO₂, or MgO. The protection layer serves a protection function to reduce the risk of the shape-memory alloy component 50 being damaged by a foreign matter. The protection layer also play a role in reducing the electrical conductivity of the shape-memory alloy component 50. By reducing the electrical conductivity of the shape-memory alloy component 50, the protection layer reduces the heat production rate during an internal short circuit, and improves the safety of the electrochemical device 100.

In an embodiment, the protection layer includes a ceramic material.

In an embodiment, the protection layer is formed on the surface of the shape-memory alloy component 50 by coating, dip-coating, or evaporation.

In an embodiment, the internal short circuit modes of the electrode assembly 20 include: a short circuit between the negative current collector 211 and the positive current collector 221; a short circuit between the negative current collector 211 and the positive active material layer 222; a short circuit between the positive current collector 221 and the negative active material layer 212; and a short circuit between the positive active material layer 222 and the negative active material layer 212. The short circuit mode between the positive current collector 221 and the negative active material layer 212 is the most rapid in generating heat and most prone to cause thermal runaway of the electrochemical device 100, and therefore, is the most dangerous one of the four internal short circuit modes.

In an embodiment, the shape-memory alloy component 50 is spaced apart from the positive current collector 221 along the first direction Z, thereby avoiding the positive current collector 221 from participating in the internal short circuit, facilitating control over the heat production during an internal short circuit of the electrode assembly 20, and improving the safety of the electrochemical device 100 against the internal short circuit.

In an embodiment, when the electrode assembly 20 is a stacked structure, the first direction Z is a direction in which the negative electrode plate 21, the separator 23, and the positive electrode plate 22 are stacked.

In an embodiment, when the electrode assembly 20 is a jelly-roll structure, the first direction Z is a direction in which the surface of the separator 23 faces the winding center. In an embodiment, when the electrode assembly 20 is a jelly-roll structure, the first direction Z is a direction in which the straight section of the separator 23 faces the winding center.

In an embodiment, the electrochemical device 100 is a cylindrical battery, the first direction Z is the radial direction of the cylindrical battery.

In an embodiment, along the first direction Z, the thickness of the negative active material layer 212 on a single side is d1, and the thickness of the positive active material layer 222 on a single side is d2. When the temperature in the electrochemical device 100 is lower than a preset temperature, the thickness of the shape-memory alloy component 50 along the first direction Z is c, satisfying: c < d1, and c < d2, thereby making it convenient to place the shape-memory alloy component 50 into the negative active material layer 212 or positive active material layer 222, reducing the impact caused by the shape-memory alloy component 50 on the space utilization rate in the electrochemical device 100, and reducing the impact caused by the shape-memory alloy component 50 on the energy density of the electrochemical device 100.

In an embodiment, the shape-memory alloy component 50 is disposed in the negative active material layer 212 and spaced apart from the negative current collector 211. When the temperature in the electrochemical device 100 reaches the preset temperature, the phase change portion 51 bends toward the separator 23 and the positive electrode plate 22. The phase change portion 51 punctures the separator 23 and is then connected to the positive active material layer 222. In this way, a relatively safe internal short circuit occurs in the electrode assembly 20, thereby implementing controllable and relatively safe self-discharge, lowering the voltage and capacity of the electrochemical device 100, reducing the risk of thermal runaway of the electrochemical device 100, and improving the safety performance of the electrochemical device 100.

In an embodiment, the negative active material layer 212 covers the shape-memory alloy component 50 of the negative electrode plate 21, thereby reducing lithium plating phenomena.

In an embodiment, the shape-memory alloy component 50 is disposed in the negative active material layer 212 and is connected to the negative current collector 211 (not shown in the drawing). When the temperature in the electrochemical device 100 reaches a preset temperature, the phase change portion 51 bends toward the separator 23 and the positive electrode plate 22, and the negative current collector 211 provides a sufficient support force for the phase change portion 51 through the support portion 52. In this way, the phase change portion 51 can puncture the separator 23 and be connected to the positive active material layer 222, thereby increasing the success rate and efficiency of the phase change portion 51 in puncturing the separator 23.

In an embodiment, the shape-memory alloy component 50 is disposed in the positive active material layer 222 and spaced apart from the positive current collector 221 (not shown in the drawing). When the temperature in the electrochemical device 100 reaches the preset temperature, the phase change portion 51 bends toward the separator 23 and the negative electrode plate 21. The phase change portion 51 punctures the separator 23 and is then connected to the negative active material layer 212. In this way, a relatively safe internal short circuit occurs in the electrode assembly 20, thereby implementing controllable and relatively safe self-discharge, lowering the voltage and capacity of the electrochemical device 100, reducing the risk of thermal runaway of the electrochemical device 100, and improving the safety performance of the electrochemical device 100.

To be described in more detail as an example below, the shape-memory alloy component 50 is disposed in the negative active material layer 212 (as shown in FIG. 4).

In an embodiment, along the first direction Z, a distance between the shape-memory alloy component 50 and the negative current collector 211 is k, satisfying: 0 < k ≤ 190 µm, thereby making it convenient to dispose the shape-memory alloy component 50 in the negative active material layer 212.

In an embodiment, 0 < k ≤ 100 µm.

In an embodiment, along the first direction Z, the thickness of the separator 23 is d3, satisfying: 3 µm ≤ d3 ≤ 20 µm, thereby reducing the risk of a short circuit between the negative electrode plate 21 and the positive electrode plate 22, reducing the impact caused by the separator 23 on the space utilization rate in the electrochemical device 100, and reducing the impact caused by the separator 23 on the energy density of the electrochemical device 100.

In an embodiment, 5 µm < d3 ≤ 15 µm, thereby achieving a balance between good insulation properties of the separator 23 and reduced impact caused by the separator on the space utilization rate in the electrochemical device 100.

In an embodiment, the value of d3 is any one of 3 µm, 4 µm, 5 µm, 6 µm, 7 µm, 8 µm, 9 µm, 10 µm, 11 µm, 12 µm, 13 µm, 14 µm, 15 µm, 16 µm, 17 µm, 18 µm, 19 µm, or 20 µm.

In an embodiment, the thickness d1 of the negative active material layer 212 on a single side satisfies: 30 µm ≤ d1 ≤ 200 µm, thereby favorably achieving a balance between a high energy density of the electrochemical device 100 and reduced impact caused by the negative active material layer 212 on the space utilization rate in the electrochemical device 100.

In an embodiment, 50 µm ≤ d1 ≤ 150 µm, thereby more favorably achieving a balance between a high energy density of the electrochemical device 100 and reduced impact caused by the negative active material layer 212 on the space utilization rate in the electrochemical device 100.

In an embodiment, the value of d1 is any one of 30 µm, 40 µm, 50 µm, 60 µm, 70 µm, 80 µm, 90 µm, 100 µm, 110 µm, 120 µm, 130 µm, 140 µm, 150 µm, 160 µm, 170 µm, 180 µm, 190 µm, or 200 µm.

In an embodiment, the thickness d2 of the positive active material layer 222 on a single side satisfies: 30 µm ≤ d2 ≤ 200 µm, thereby favorably achieving a balance between a high energy density of the electrochemical device 100 and reduced impact caused by the positive active material layer 222 on the space utilization rate in the electrochemical device 100.

In an embodiment, 50 µm ≤ d2 ≤ 150 µm, thereby more favorably achieving a balance between a high energy density of the electrochemical device 100 and reduced impact caused by the positive active material layer 222 on the space utilization rate in the electrochemical device 100.

In an embodiment, the value of d2 is any one of 30 µm, 40 µm, 50 µm, 60 µm, 70 µm, 80 µm, 90 µm, 100 µm, 110 µm, 120 µm, 130 µm, 140 µm, 150 µm, 160 µm, 170 µm, 180 µm, 190 µm, or 200 µm.

In an embodiment, along the first direction Z, a distance between the support portion 52 and the positive current collector 221 is d4, and a height of the phase change portion 51 after bending toward the separator 23 is H, satisfying: d3 < H < d4. In this way, the phase change portion 51 can puncture the separator 23, favorably prevent the phase change portion 51 from being connected to the positive current collector 221 to cause a short circuit that involves the positive current collector 221, reduce the risk of thermal runaway of the electrochemical device 100, and improve the safety performance of the electrochemical device 100. The height of the phase change portion 51 after bending toward the separator 23 means: the height of the second end 512 relative to the support portion 52 after the phase change portion 51 is bent and deformed.

In an embodiment, 3 µm < H ≤ 410 µm. In this way, after being bent and deformed, the phase change portion 51 can favorably act on the separator 23 to puncture the separator 23, thereby implementing controllable and relatively safe self-discharge.

In an embodiment, 50 µm < H ≤ 275 µm. In this way, after being bent and deformed, the phase change portion 51 can more favorably puncture the separator 23, thereby implementing controllable and relatively safe self-discharge, and further improving the safety of the electrochemical device 100.

In an embodiment, a bend angle between a deformed phase change portion 51 and the support portion 52 is θ, satisfying: 30° ≤ θ < 180°, thereby facilitating the phase change portion 51 to puncture the separator 23. The bend angle θ is an angle between the deformed phase change portion 51 and a plane in which the support portion 52 is located before being deformed.

In an embodiment, 45° ≤ θ ≤ 135°. When the second end 512 of the phase change portion 51 acts on the separator 23, the angle θ falling within this range increases a component force of the acting force of the phase change portion 51 on the separator 23 along the first direction Z, and improves the success rate and efficiency of the phase change portion 51 in puncturing the separator 23.

In an embodiment, 75° ≤ θ ≤ 105°. When the second end 512 of the phase change portion 51 acts on the separator 23, the angle θ falling within this range further increases the component force of the acting force of the phase change portion 51 on the separator 23 along the first direction Z, and improves the success rate and efficiency of the phase change portion 51 in puncturing the separator 23.

In an embodiment, θ is 90°. When the second end 512 of the phase change portion 51 acts on the separator 23, this angle value further increases the component force of the acting force of the phase change portion 51 on the separator 23 along the first direction Z, and improves the success rate and efficiency of the phase change portion 51 in puncturing the separator 23.

In an embodiment, the value of θ is any one of 30°, 35°, 40°, 45°, 50°, 55°, 60°, 65°, 70°, 75°, 80°, 85°, 90°, 95°, 100°, 105°, 110°, 115°, 120°, 125°, 130°, 135°, 140°, 145°, 150°, 155°, 160 °, 165°, 170°, or 175°.

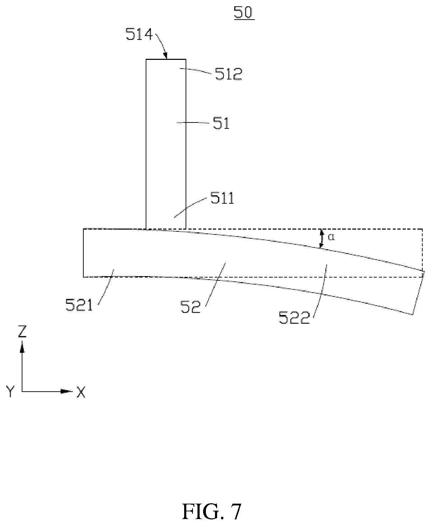

As shown in FIG. 7, in an embodiment, a bend angle α of the reversely bent and deformed support portion 52 is α, satisfying: 15° ≤ α < 40°, thereby enabling the support portion 52 to provide a stable support force for the phase change portion 51, endowing the phase change portion 51 with a force strong enough to puncture the separator 23, and reducing the impact caused by the reverse deformation of the support portion 52 on the positive current collector 221 or negative current collector 211. The bend angle α is an angle between the support portion 52 in a bent and deformed state and the support portion in an undeformed state.

In an embodiment, 25° ≤ α ≤ 30°, thereby not only ensuring a sufficient support force of the support portion 52 for the phase change portion 51, but also reducing the impact caused by the reverse deformation of the support portion 52 on the positive current collector 221 or negative current collector 211.

In an embodiment, the value of α is any one of 15°, 16°, 17°, 18°, 19°, 20°, 21°, 22°, 23°, 24°, 25°, 26°, 27°, 28°, 29°, 30°, 31°, 32°, 33°, 34°, 35°, 36°, 37°, 38°, or 39°.

In an embodiment, the support portion 52 includes a first region 521 and a second region 522 connected to each other. The first region 521 is connected to the first end 511 of the phase change portion 51. When the temperature in the electrochemical device 100 reaches a preset temperature, the phase change portion 51 bends toward the separator 23. The first region 521 acts as a support region to provide a support force for the phase change portion 51 in the specified direction. In addition, the second region 522 bends in an opposite direction. The second region 522 applies an acting force on the first region 521 toward the separator 23 and transfers the force to the phase change portion 51, so that the phase change portion 51 receives a sufficient acting force for inclination toward the separator 23, thereby increasing the success rate and efficiency of puncturing the separator 23.

In an embodiment, a recessed region 523 is disposed on one side of the support portion 52. The recessed region 523 includes an opening 524. The phase change portion 51 is accommodated in the recessed region 523. The first end 511 is connected to the first region 521 of the support portion 52 in the recessed region 523. The second end 512 is disposed toward the opening 524 of the recessed region 523. By disposing the phase change portion 51 in the recessed region 523 of the support portion 52, the volume occupied by the shape-memory alloy component 50 is reduced, the impact caused by the component on the positive active material layer 222 or negative active material layer 212 is reduced, and the impact caused by the component on the energy density of the electrochemical device 100 is reduced.

In an embodiment, the second region 522 includes two parts. Along a second direction Y perpendicular to the first direction Z, one part of the second region 522 is located on one side of the phase change portion 51 and the other part of the second region 522 is located on the other side of the phase change portion 51. The first region 521 is located between the two parts of the second region 522, and connects the two parts. When the temperature in the electrochemical device 100 reaches a preset temperature, the phase change portion 51 bends toward the separator 23. Both parts of the second region 522 bend away from the separator 23, thereby exerting a sufficient acting force for the phase change portion 51 to incline toward the separator 23, and in turn, increasing the success rate and efficiency of puncturing the separator 23.

In an embodiment, along a third direction X perpendicular to the first direction Z and the second direction Y, the length of the shape-memory alloy component 50 is a, satisfying: 5 mm ≤ a ≤ 30 mm, thereby facilitating the phase change portion 51 to puncture the separator 23, reducing the impact of the shape-memory alloy component 50 on the active material layer, and reducing the impact of the shape-memory alloy component 50 on the energy density of the electrochemical device 100.

In an embodiment, the value of a is any one of 5 mm, 6 mm, 7 mm, 8 mm, 9 mm, 10 mm, 11 mm, 12 mm, 13 mm, 14 mm, 15 mm, 16 mm, 17 mm, 18 mm, 19 mm, 20 mm, 21 mm, 22 mm, 23 mm, 24 mm, 25 mm, 26 mm, 27 mm, 28 mm, 29 mm, or 30 mm.

In an embodiment, along the second direction Y, the length of the shape-memory alloy component 50 is b, satisfying: 5 mm ≤ b ≤ 30 mm, thereby facilitating the phase change portion 51 to puncture the separator 23, reducing the impact of the shape-memory alloy component 50 on the active material layer, and reducing the impact of the shape-memory alloy component 50 on the energy density of the electrochemical device 100.

In an embodiment, the value of b is any one of 5 mm, 6 mm, 7 mm, 8 mm, 9 mm, 10 mm, 11 mm, 12 mm, 13 mm, 14 mm, 15 mm, 16 mm, 17 mm, 18 mm, 19 mm, 20 mm, 21 mm, 22 mm, 23 mm, 24 mm, 25 mm, 26 mm, 27 mm, 28 mm, 29 mm, or 30 mm.

In an embodiment, the first end 511 of the phase change portion 51 includes a first edge 513. The second end 512 of the phase change portion 51 includes a second edge 514. The first edge 513 and the second edge 514 are located on two opposite end portions of the phase change portion 51 respectively, and both extend along the second direction Y. The first edge 513 is parallel to the second edge 514. Along the second direction Y, the length of the first edge 513 is e and the length of the second edge 514 is f, satisfying: e > f, thereby facilitating bending of the phase change portion 51, facilitating the second end 512 to form a tip to puncture the separator 23, and improving the success rate and efficiency of the second end 512 in puncturing the separator 23.

In an embodiment, b/2 ≤ e < b, thereby increasing stability of the connection between the first end 511 and the support portion 52, and improving the success rate and efficiency of the second end 512 in puncturing the separator 23.

In an embodiment, 0 < f ≤ e/2, thereby making the phase change portion 51 more capable of puncturing the separator 23 after bending, and improving the success rate and efficiency of puncturing the separator 23.

In an embodiment, 1 mm ≤ e < 50 mm, thereby increasing stability of the connection between the first end 511 and the support portion 52, and improving the success rate and efficiency of the second end 512 in puncturing the separator 23.

In an embodiment, 2.5 mm ≤ e ≤ 20 mm, thereby further increasing stability of the connection between the first end 511 and the support portion 52, and improving the success rate and efficiency of the second end 512 in puncturing the separator 23.

In an embodiment, 0 < f < 20 mm, thereby improving the success rate and efficiency of the second end 512 in puncturing the separator 23. In other embodiments, if f = 0, then the second end 512 is in the shape of a spike, thereby impairing the structural strength of the phase change portion 51. In contrast, in an embodiment of this application, f satisfies: 0 < f < 20 mm, thereby making the second end capable of puncturing the separator 23 to form an internal short circuit while ensuring sufficient structural strength of the second end 512.

In an embodiment, 1.5 mm ≤ f ≤ 10 mm, thereby achieving a better tradeoff between the structural strength of the second end 512 and the success rate of puncturing the separator 23.

In an embodiment, the length of the phase change portion 51 is g, satisfying: g × Sinθ = H, where the length of the phase change portion 51 means: a distance between the first edge 513 and the second edge 514 when the temperature in the electrochemical device 100 is lower than a preset temperature or when the phase change portion 51 is not bent or deformed.

In an embodiment, b < g < a, thereby facilitating the phase change portion 51 to puncture the separator 23 after bending and deforming, and improving the success rate and efficiency of the phase change portion 51 in puncturing the separator 23.

In an embodiment, 0.05 mm ≤ g < 40 mm, thereby facilitating the phase change portion 51 to be able to protrude out of the negative active material layer 212 and puncture the separator 23 after bending and deforming, and reducing the risk of thermal runaway of the electrochemical device 100.

In an embodiment, 0.05 mm ≤ g < 20 mm, thereby facilitating the phase change portion 51 to be more able to protrude out of the negative active material layer 212 and puncture the separator 23 after bending and deforming, and reducing the risk of thermal runaway of the electrochemical device 100.

In an embodiment, the value of g is any one of 0.05 mm, 0.1 mm, 0.5 mm, 1 mm, 1.5 mm, 2 mm, 2.5 mm, 3 mm, 3.5 mm, 4 mm, 4.5 mm, 5 mm, 5.5 mm, 6 mm, 6.5 mm, 7 mm, 7.5 mm, 8 mm, 8.5 mm, 9 mm, 9.5 mm, 10 mm, 10.5 mm, 11 mm, 11.5 mm, 12 mm, 12.5 mm, 13 mm, 13.5 mm, 14 mm, 14.5 mm, 15 mm, 15.5 mm, 16 mm, 16.5 mm, 17 mm, 17.5 mm, 18 mm, 18.5 mm, 19 mm, 19.5 mm, 20 mm, 20.5 mm, 21 mm, 21.5 mm, 22 mm, 22.5 mm, 23 mm, 23.5 mm, 24 mm, 24.5 mm, 25 mm, 25.5 mm, 26 mm, 26.5 mm, 27 mm, 27.5 mm, 28 mm, 28.5 mm, 29 mm, 29.5 mm, 30 mm, 30.5 mm, 31 mm, 31.5 mm, 32 mm, 32.5 mm, 33 mm, 33.5 mm, 34 mm, 34.5 mm, 35 mm, 35.5 mm, 36 mm, 36.5 mm, 37 mm, 37.5 mm, 38 mm, 38.5 mm, 39 mm, or 39.5 mm.

In an embodiment, the two parts of the second region 522 are parallel to each other, and the recessed region 523 is rectangular in shape, thereby facilitating the processing and manufacturing of the shape-memory alloy component 50 and saving the manufacturing cost of the shape-memory alloy component 50.

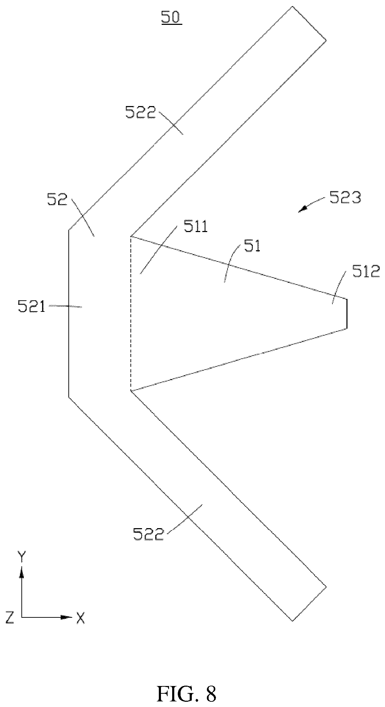

As shown in FIG. 8, in an embodiment, two parts of the second region 522 are disposed at an angle to each other. The angle is obtuse, and the recessed region 523 is fan-shaped. When the phase change portion 51 is bent and deformed, the first region 521 and the second region 522 form an approximate triangular shape, thereby improving the stability of the support portion 52, making the phase change portion 51 exert a sufficient acting force on the separator 23, and improving the success rate and efficiency of puncturing the separator 23.

In an embodiment, the angle formed by the two parts of the second region 522 is 145°.

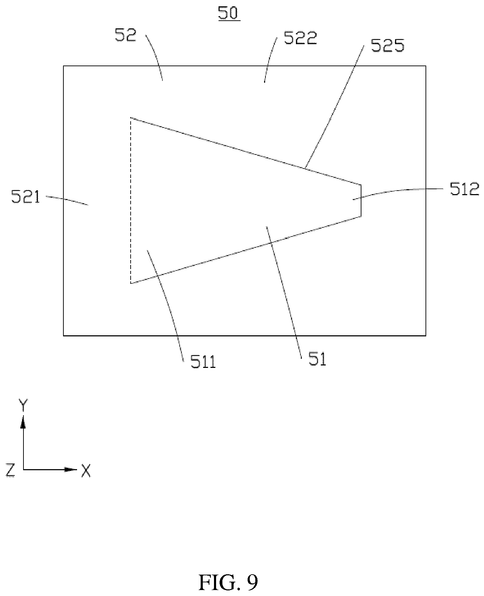

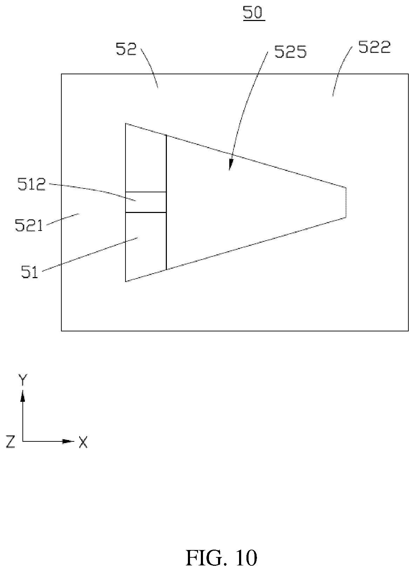

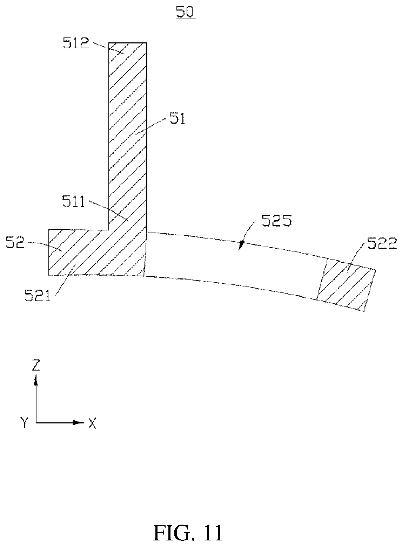

As shown in FIG. 9, FIG. 10, and FIG. 11, in an embodiment, a receptacle 525 is disposed in the support portion 52. The phase change portion 51 is disposed in the receptacle 525. The first end 511 is connected to the support portion 52 on one side of the receptacle 525. The support portion 52 includes a receptacle 525 for accommodating the phase change portion 51, thereby increasing the surface area and structural strength of the support portion 52, enabling the support portion 52 to provide a sufficient support force for the phase change portion 51, and enabling the phase change portion 51 to puncture the separator 23, and in turn, reducing the risk of failure of the shape-memory alloy component 50.

In an embodiment, the inner contour of the receptacle 525 coordinates with the outer contour of the phase change portion 51 to reduce the impact of the shape-memory alloy component 50 on the negative active material layer 212, and reduce the impact of the shape-memory alloy component 50 on the energy density of the electrochemical device 100.

In an embodiment, the first region 521 and the second region 522 form a ring structure. The receptacle 525 is located in the ring structure, thereby increasing the area of the second region 522. When the second region 522 is bent away from the separator 23, the second region 522 can exert a relatively large acting force toward the separator 23 on the first region 521. The second region 522 provides a sufficient support force to enable the phase change portion 51 to puncture the separator 23, thereby improving the speed and success rate of puncturing the separator 23.

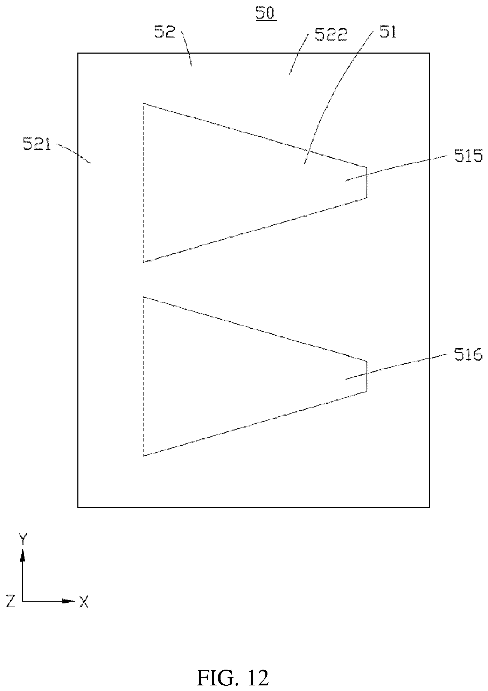

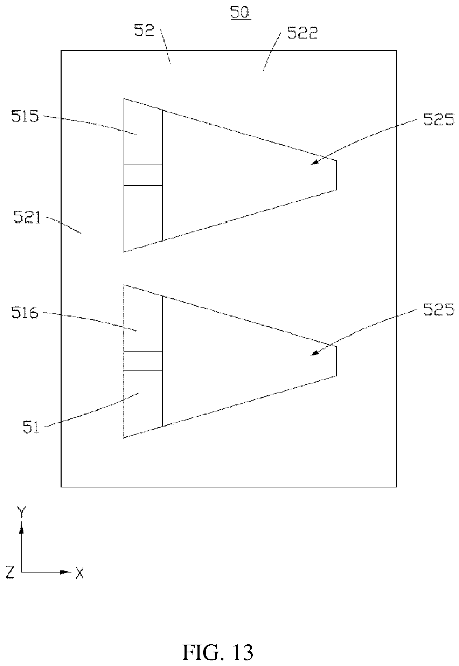

As shown in FIG. 12 and FIG. 13, in an embodiment, the phase change portion 51 includes a first phase change portion 515 and a second phase change portion 516. The first phase change portion 515 and the second phase change portion 516 are connected to the support portion 52 separately. The first phase change portion 515 is spaced apart from the second phase change portion 516. When the temperature in the electrochemical device 100 rises to a preset temperature, the first phase change portion 515 and the second phase change portion 516 bend and deform at the same time, thereby increasing the speed and success rate of puncturing the separator 23, reducing the risk of thermal runaway of the electrochemical device 100, and improving the safety performance of the electrochemical device 100.

In an embodiment, the first phase change portion 515 and the second phase change portion 516 assume the same shape, thereby facilitating the processing and manufacturing of the shape-memory alloy component 50.

In an embodiment, the first phase change portion 515 and the second phase change portion 516 are arranged along the second direction Y.

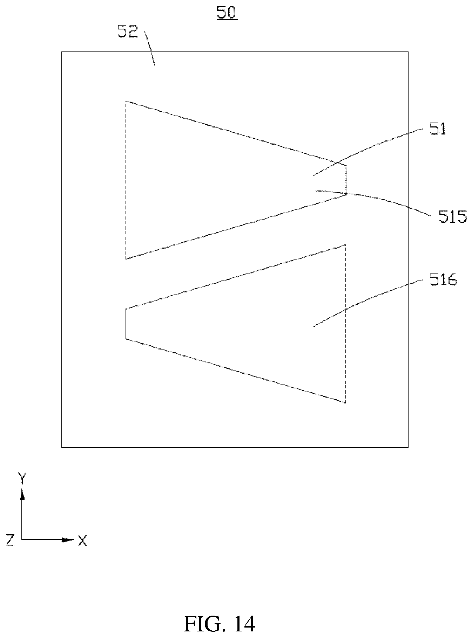

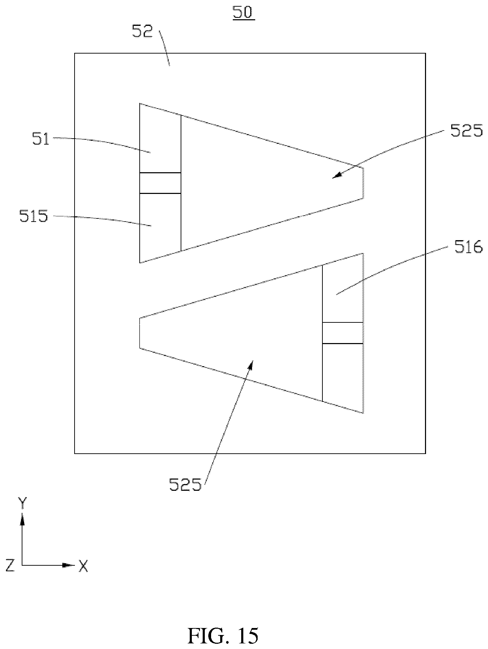

As shown in FIG. 14 and FIG. 15, in an embodiment, the first phase change portion 515 is centrosymmetric to the second phase change portion 516. When the temperature in the electrochemical device 100 rises to the preset temperature, the first phase change portion 515 and the second phase change portion 516 bend in opposite directions and act on the separator 23 to form a reverse tearing force on the surface of the separator 23, thereby increasing the speed and success rate of puncturing the separator 23, reducing the risk of thermal runaway of the electrochemical device 100, and improving the safety performance of the electrochemical device 100.

In an embodiment, the phase change portion 51 includes other phase change portions 51 (not shown in the drawing) in addition to the first phase change portion 515 and the second phase change portion 516. The increased number of phase change portions 51 increases the speed and success rate of puncturing the separator 23, reduces the risk of thermal runaway of the electrochemical device 100, and improves the safety performance of the electrochemical device 100.

To verify the effect of the shape-memory alloy component 50 in the electrochemical device 100 in alleviating thermal runway, the following tests are performed:

Charging an electrochemical device 100 at a constant current rate of 0.5C in a 25 °C environment until the voltage reaches a full-charge voltage value (for example, 4.5 V), leaving the electrochemical device to stand for 10 minutes, and then charging the battery at a constant voltage of 4.5 V until the current drops to a cut-off current (for example, 0.05C) so that the electrochemical device reaches a fully-charged state; and checking the appearance of the electrochemical device to ensure that the electrochemical device 100 is in a normal and usable state;

placing the fully charged electrochemical device 100 into an oven, and increasing the ambient temperature in the oven at a rate of 5 °C/min until the specified hot box test temperature (for example, 130 °C), and keeping the ambient temperature in the oven for one hour, during which the status of the electrochemical device 100 is observed.

An electrochemical device 100 catching fire, exploding, or otherwise abnormal is deemed as failing the test. An electrochemical device 100 neither catching fire nor exploding is deemed as passing the test.

Comparative Embodiment 1: The electrochemical device includes a shape-memory alloy component, but the shape-memory alloy component includes just a phase change portion without a support portion.

Comparative Embodiment 2: The electrochemical device includes a shape-memory alloy component, and the shape-memory alloy component includes both a support portion and a phase change portion. The support portion is not deformable.

Embodiments: The electrochemical device according to this application includes a shape-memory alloy component. The shape-memory alloy component includes both a support portion and a phase change portion. The support portion is deformable in an opposite direction to the phase change portion.

For each comparative embodiment and each embodiment, 10 specimens are selected for the above test. The test results are recorded and set out in the following table:

**Table 1**

| Group | Is support portion provided? | Angle of reversely deformed support portion (°) | Test results |
|---|---|---|---|
| Comparative Embodiment 1 | No | - | 1/10 |
| Comparative Embodiment 2 | Yes | 0 | 4/10 |
| Embodiment 1 | Yes | 5 | 7/10 |
| Embodiment 2 | Yes | 10 | 8/10 |
| Embodiment 3 | Yes | 15 | 10/10 |
| Embodiment 4 | Yes | 25 | 10/10 |
| Embodiment 5 | Yes | 30 | 10/10 |
| Embodiment 6 | Yes | 40 | 10/10 |
| Comparative Embodiment 7 | Yes | 50 | 7/10 |
| Comparative Embodiment 8 | Yes | 90 | 6/10 |

In the test results above, the denominator of a fraction indicates the number of specimens tested, and the numerator indicates the number that has passed the test. As an example, in the test results of Comparative Embodiment 1, "1/10" means that 10 electrochemical devices are tested, and the number of electrochemical devices that pass the test is 1.

To sum up, in the electrochemical device 100 of this application, by disposing the shape-memory alloy component 50 in the electrode plate, when the temperature in the electrochemical device 100 reaches a preset temperature, the phase change portion 51 of the shape-memory alloy component 50 deforms and bends. The support portion 52 disposed at the first end 511 of the phase change portion 51 provides a support force for the phase change portion 51, thereby endowing the phase change portion 51 with a force strong enough to puncture the separator 23. In this way, an internal short circuit occurs between the negative active material layer 212 and the positive active material layer 222, or between the negative current collector 211 and the positive active material layer 222, thereby implementing controllable and relatively safe self-discharge, lowering the voltage and capacity of the electrochemical device 100, reducing the risk of thermal runaway of the electrochemical device 100, and improving the safety performance of the electrochemical device 100.

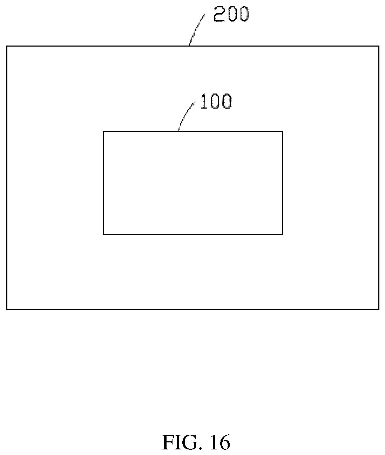

As shown in FIG. 16, an embodiment of this application further provides an electronic device 200. The electronic device 200 includes the electrochemical device 100 according to any one of the foregoing embodiments.

In the electronic device 200, a shape-memory alloy component 50 is disposed in the electrode plate of the electrochemical device 100. When the temperature in the electrochemical device 100 reaches a preset temperature, the phase change portion 51 of the shape-memory alloy component 50 deforms and bends. The support portion 52 disposed at the first end 511 of the phase change portion 51 provides a support force for the phase change portion 51, thereby endowing the phase change portion 51 with a force strong enough to puncture the separator 23. In this way, an internal short circuit occurs between the negative active material layer 212 and the positive active material layer 222, or between the negative current collector 211 and the positive active material layer 222, thereby implementing controllable and relatively safe self-discharge, lowering the voltage and capacity of the electrochemical device 100, reducing the risk of thermal runaway of the electrochemical device 100, and reducing the impact on the electronic device 200 caused by the temperature rise in the electrochemical device 100.

In an embodiment, the electrochemical device 100 can provide electrical energy for the electronic device 200.

In an embodiment, the electronic devices 200 include, but are not limited to, a 3C product, an unmanned aerial vehicle, an electric vehicle, an electric two-wheeler, a household appliance, and an electric tool.

In addition, a person skilled in the art may make other variations to this application without departing from the essence of this application. The variations made based on the essence of this application still fall within the protection scope of this application.

## Claims

1. An electrochemical device, **characterized in that** the electrochemical device comprises:
a positive electrode plate, comprising a positive current collector and a positive active material layer, wherein the positive active material layer is disposed on a surface of the positive current collector;
a negative electrode plate, comprising a negative current collector and a negative active material layer, wherein the negative active material layer is disposed on a surface of the negative current collector;
a separator, disposed between the positive electrode plate and the negative electrode plate; and
a shape-memory alloy component disposed on one side of the positive current collector and/or the negative current collector, the side being oriented toward the separator, and the shape-memory alloy component is spaced apart from the positive current collector; wherein the shape-memory alloy component comprises a phase change portion and a support portion, the phase change portion comprises a first end and a second end disposed opposite to each other, and the first end is connected to the support portion; when a temperature of the electrochemical device is higher than a preset temperature, the second end deforms toward the separator to puncture the separator, and the support portion deforms in a reverse direction relative to the phase change portion.

2. The electrochemical device according to claim 1, **characterized in that**
a bend angle α of a reversely deformed support portion satisfies: 15° ≤ α < 40°.

3. The electrochemical device according to claim 1, **characterized in that**
a recessed region is disposed on one side of the support portion, the recessed region comprises an opening, the phase change portion is accommodated in the recessed region, the first end is connected to the support portion in the recessed region, and the second end is disposed toward the opening of the recessed region.

4. The electrochemical device according to claim 1, **characterized in that**
a receptacle is disposed in the support portion, the phase change portion is disposed in the receptacle, and the first end is connected to the support portion on one side of the receptacle.

5. The electrochemical device according to claim 1, **characterized in that**
the phase change portion comprises a first phase change portion and a second phase change portion; wherein the first phase change portion and the second phase change portion are connected to the support portion separately, and the first phase change portion is spaced apart from the second phase change portion.

6. The electrochemical device according to claim 5, **characterized in that**
the first phase change portion and the second phase change portion assume a same shape, and the first phase change portion is centrosymmetric to the second phase change portion.

7. The electrochemical device according to claim 1, **characterized in that**
the first end of the phase change portion comprises a first edge, the second end of the phase change portion comprises a second edge; wherein the first edge is parallel to the second edge, and a length e of the first edge is greater than a length f of the second edge.

8. The electrochemical device according to claim 7, **characterized in that**
the length e of the first edge and the length f of the second edge satisfy: e/2 ≥ f > 0.

9. The electrochemical device according to claim 1, **characterized in that**
a thickness of the shape-memory alloy component is less than a thickness of the negative active material layer or the positive active material layer, and the negative active material layer covers the shape-memory alloy component of the negative electrode plate.

10. The electrochemical device according to claim 9, **characterized in that**
the shape-memory alloy component is disposed in the negative electrode plate, a height of a bent phase change portion is less than a distance between the support portion and the positive current collector.

11. The electrochemical device according to claim 1, **characterized in that**
a bend angle θ between a deformed phase change portion and the support portion satisfies: 30° ≤ θ < 180°; and
a length g of the phase change portion and a height H of the deformed phase change portion satisfy: g × Sinθ = H.

12. The electrochemical device according to claim 1, **characterized in that**
constituents of the shape-memory alloy component comprise at least one of: a nickel-titanium alloy, a titanium-nickel-niobium alloy, a titanium-nickel-palladium alloy, or a titanium-nickel-cobalt alloy; and
a protection layer is disposed on a surface of the shape-memory alloy component, and constituents of the protection layer comprise at least one of Al₂O₃, TiO₂, or MgO.

13. The electrochemical device according to claim 1, **characterized in that**
when the temperature of the electrochemical device is lower than the preset temperature, the phase change portion and the support portion are able to return to an original shape.

14. An electronic device, **characterized in that** the electronic device comprises the electrochemical device according to any one of claims 1 to 13.
